# EUROPEAN PATENT APPLICATION

(11) **EP 4 564 703 A2**
(43) Date of publication of application: **04.06.2025**
(21) Application number: 24216779.9
(22) Date of filing: 02.12.2024
(51) Int. Cl.: H04B 7/06

(54) **CONTROLLED TERMINAL-INITIATED BEAM MANAGEMENT IMPLEMENTATION**

(30) Priority: 01.12.2023 GB 202318405
(71) Applicant: Nokia Technologies Oy, 02610 Espoo (FI)
(72) Inventor: BARACCA, Paolo, Munich (DE); CAPORAL DEL BARRIO, Samantha, Aalborg (DK); HAKOLA, Sami-Jukka, Kempele (FI); DEGHEL, Matha, Montrouge (FR)
(74) Representative: Nokia EPO representatives

(57) **Abstract**

There are provided measures for controlled terminal-initiated beam management Such measures exemplarily comprise receiving, from an access network entity, information for selecting candidate beams from a plurality of beams, receiving, from said access network entity, at least one beam reporting triggering condition, selecting preferred beams from said plurality of beams based on a terminal-side optimization parameter, evaluating whether at least one preferred beam of said preferred beams was to be selected based on said information for selecting candidate beams, determining that at least one preferred beam which was to be selected based on said information for selecting candidate beams fulfills one of said at least one beam reporting triggering condition, and transmitting, towards said access network entity, an indication that said at least one preferred beam which was to be selected based on said information for selecting candidate beams fulfills said one of said at least one beam reporting triggering condition.

## Description

### Field

Various example embodiments relate to controlled terminal-initiated beam management. More specifically, various example embodiments exemplarily relate to measures (including methods, apparatuses and computer program products) for realizing controlled terminal-initiated beam management.

### Background

The present specification generally relates to beam management.

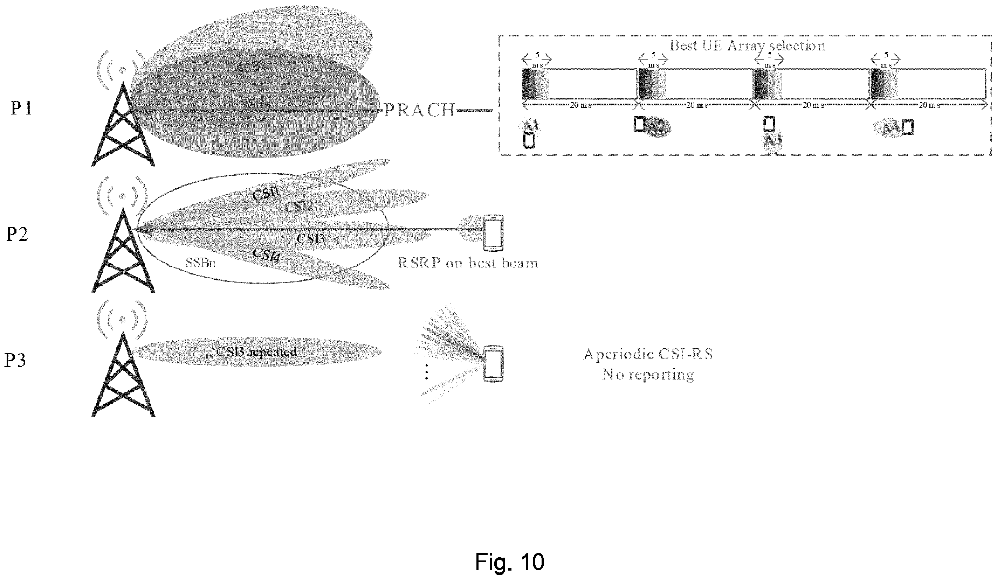

From Rel-15 to Rel-18 5^{th} Generation (5G) New Radio (NR), the beam management has been specified in three phases controlled by the network: Phase#1 (P1), Phase#2 (P2), and Phase#3 (P3), as illustrated in FIG. 10.

FIG. 10 shows a schematic diagram of an example of a system environment with signaling and beam variants, and in particular illustrates beam management procedures according to P1 to P3.

The following beam management procedures are supported within one or multiple transmission reception points (TRP) of a serving cell:
P1 is used to enable UE measurement on different TRP Tx beams to support selection of TRP Tx beams/UE Rx beam(s).
   For beamforming at TRP, it typically includes an intra/inter-TRP Tx beam sweep from a set of different beams. For beamforming at a user equipment (UE), it typically includes a UE Rx beam sweep from a set of different beams. UE may scan its antennas/panels sequentially for each SS burst and average over e.g. three samples.
P2 is used to enable UE measurement on different TRP Tx beams to possibly change inter/intra-TRP Tx beam(s).
   P2 starts from a possibly smaller set of beams for beam refinement than in P1. P2 can be a special case of P1. P2 may use narrower channel state indicator (CSI) beams compared to synchronization signal block (SSB) beams.
P3 is used to enable UE measurement on the same TRP Tx beam to change UE Rx beam in the case UE uses beamforming (e.g. millimeter wave (mmW) arrays on UEs for FR2 operation). P3 typically uses aperiodic CSI-RS with 'repetition' flag ON and UE L1-RSRP/SINR reporting being disabled.

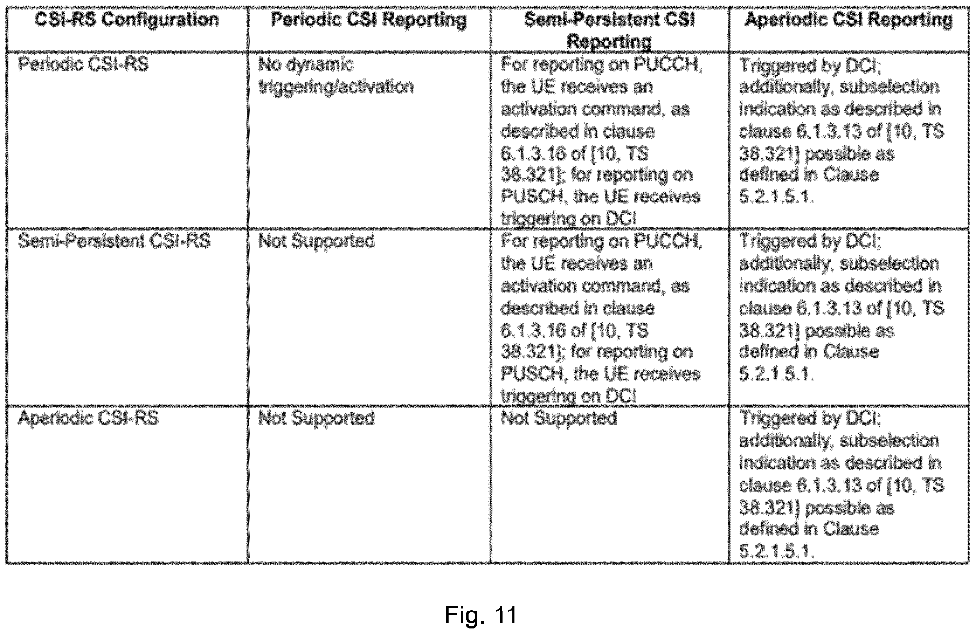

FIG. 11 is a table specifying parameters for CSI reporting, and in particular reflects a table from Third Generation Partnership Project (3GPP) technical specification (TS) 38.214 on CSI reporting.

According thereto, "CSI-ResourceConfig" specifies what type of reference signal (nzp-CSI-RS-SSB, csi-IM-Resource) is to be transmitted. It also configures the types of the transmission (periodic, aperiodic, semi-persistent). The parameter "reportConfigType" indicates the scheduling method of the report. It can be periodic, aperiodic and semi-persistent as shown in the table of FIG. 11.

Rel-16 enables multi-TRP (mTRP) operation with simultaneous scheduling of physical downlink shared channel (PDSCH) on two beams from two TRPs.

Rel-18 is addressing the indication of two transmission configuration indicator (TCI) states simultaneously in the unified TCI framework.

In the scope of Rel-19 preparation, some use cases where UE could benefit from initiating the beam reporting and/or switch are being identified.

The UE-initiated TCI-state/beam reporting/switch feature refers to the case where the UE may be configured with at least one event/condition, and then the UE may start TCI-state/beam reporting/switch if this at least one event/condition occurs or is satisfied.

Mostly, the benefits are regarding the delays of CSI L1-RSRP/L1-SINR reporting and the overhead of the reporting.

Clear advantages with UE-initiated beam reporting when compared to periodic beam reporting (with increased periodicity) are, among others, that the delays may be shorter between reports for a period of time to avoid e.g. failures, and that reports are only transmitted when needed, leading to a reduction in the overall system overhead.

Implementation, e.g. signalling/mechanism to facilitate UE-initiated beam management procedure including UE-initiated beam reporting/switch are to be provided to achieve reduction in overhead/latency through UE-initiated/event-driven beam management as part of beam management enhancements.

Namely, one aspect to be addressed is that not all the beams have the same weight/importance.

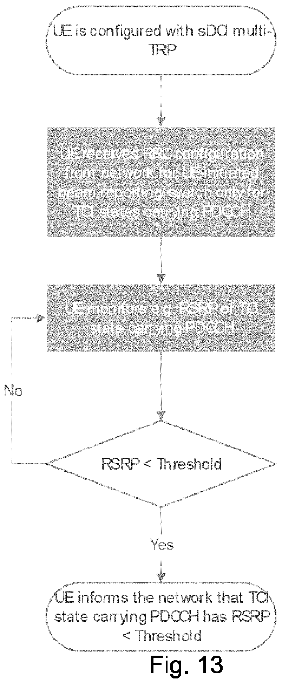

FIG. 13 shows a schematic diagram of an example of a system environment with beam variants, and in particular illustrates a single downlink control information (sDCI) mTRP scenario.

As an example, in the sDCI mTRP scenario (i.e., a scenario illustrated in FIG. 13), there is one beam/TCI state associated to a first TRP that transmits the control information / downlink control information (DCI), and another beam/TCI associated to a second TRP that does not transmit the control information / DCI, but only data information.

The beam/TCI state associated to a first TRP that transmits the control information / DCI carries PDCCH associated with both common and user specific search space sets. This beam/TCI state further sends beam switching commands. This beam/TCI state further schedules PDSCHs, physical uplink shared channels (PUSCH), channel state indicator reference signals (CSI-RS), and sounding reference signals (SRS) for both TRPs.

The beam/TCI associated to a second TRP that does not transmit the control information / DCI carries PDSCH only. This beam/TCI state further is useful to improve the achieved throughput. This beam/TCI state further can be used for beam failure declaration.

On one side, in view of advantages accompanied therewith, it might be intended/desired/wanted that the UE (as an example of a terminal) does UE-initiated beam reporting/switch in order to, in certain situations, either reduce overhead or to avoid beam failure.

However, on the other side, it might be intended/desired/wanted that the network still has control of the whole beam management procedure.

Hence, the problem arises that measures are needed that allow for a flexible control and implementation of terminal-initiated beam reporting and in particular that allow for definition and consideration of bounds/frameworks for such terminal-initiated beam reporting.

Hence, there is a need to provide for controlled terminal-initiated beam management.

### Summary

Various example embodiments aim at addressing at least part of the above issues and/or problems and drawbacks.

Various aspects of example embodiments are set out in the appended claims.

According to an exemplary aspect, there is provided an apparatus, the apparatus comprising at least one processor, and at least one memory storing instructions that, when executed by the at least one processor, cause the apparatus at least to perform receiving, from an access network entity, information for selecting candidate beams from a plurality of beams, receiving, from said access network entity, at least one beam reporting triggering condition, selecting preferred beams from said plurality of beams based on a terminal-side optimization parameter, evaluating whether at least one preferred beam of said preferred beams was to be selected based on said information for selecting candidate beams, determining that at least one preferred beam which was to be selected based on said information for selecting candidate beams fulfills one of said at least one beam reporting triggering condition, and transmitting, towards said access network entity, an indication that said at least one preferred beam which was to be selected based on said information for selecting candidate beams fulfills said one of said at least one beam reporting triggering condition.

According to an exemplary aspect, there is provided a method, the method comprising receiving, from an access network entity, information for selecting candidate beams from a plurality of beams, receiving, from said access network entity, at least one beam reporting triggering condition, selecting preferred beams from said plurality of beams based on a terminal-side optimization parameter, evaluating whether at least one preferred beam of said preferred beams was to be selected based on said information for selecting candidate beams, determining that at least one preferred beam which was to be selected based on said information for selecting candidate beams fulfills one of said at least one beam reporting triggering condition, and transmitting, towards said access network entity, an indication that said at least one preferred beam which was to be selected based on said information for selecting candidate beams fulfills said one of said at least one beam reporting triggering condition.

According to an exemplary aspect, there is provided an apparatus, the apparatus comprising at least one antenna, wherein the apparatus is configured to perform the method according to any one of the aforementioned method-related exemplary aspects of the present disclosure, wherein optionally the apparatus is a terminal.

According to an exemplary aspect, there is provided an apparatus, the apparatus comprising receiving circuitry configured to receive, from an access network entity, information for selecting candidate beams from a plurality of beams, and to receive, from said access network entity, at least one beam reporting triggering condition, selecting circuitry configured to select preferred beams from said plurality of beams based on a terminal-side optimization parameter, evaluating circuitry configured to evaluate whether at least one preferred beam of said preferred beams was to be selected based on said information for selecting candidate beams, determining circuitry configured to determine that at least one preferred beam which was to be selected based on said information for selecting candidate beams fulfills one of said at least one beam reporting triggering condition, and transmitting circuitry configured to transmit, towards said access network entity, an indication that said at least one preferred beam which was to be selected based on said information for selecting candidate beams fulfills said one of said at least one beam reporting triggering condition.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient control and implementation of terminal-initiated beam reporting to thereby solve at least part of the problems and drawbacks identified in relation to the prior art.

By way of example embodiments, there is provided controlled terminal-initiated beam management. More specifically, by way of example embodiments, there are provided measures and mechanisms for realizing controlled terminal-initiated beam management.

Thus, improvement is achieved by methods, apparatuses and computer program products enabling/realizing controlled terminal-initiated beam management.

### Brief description of the drawings

In the following, the present disclosure will be described in greater detail by way of non-limiting examples with reference to the accompanying drawings, in which
FIG. 1 is a block diagram illustrating an apparatus according to example embodiments,
FIG. 2 is a block diagram illustrating an apparatus according to example embodiments,
FIG. 3 is a block diagram illustrating an apparatus according to example embodiments,
FIG. 4 is a block diagram illustrating an apparatus according to example embodiments,
FIG. 5 is a block diagram illustrating an apparatus according to example embodiments,
FIG. 6 is a block diagram illustrating an apparatus according to example embodiments,
FIG. 7 is a schematic diagram of a procedure according to example embodiments,
FIG. 8 is a schematic diagram of a procedure according to example embodiments,
FIG. 9 is a schematic diagram of a procedure according to example embodiments,
FIG. 10 shows a schematic diagram of an example of a system environment with signaling and beam variants,
FIG. 11 is a table specifying parameters for CSI reporting,
FIG. 12 shows a schematic diagram of an example of a system environment with beam variants,
FIG. 13 is a schematic diagram of a procedure according to example embodiments,
FIG. 14 shows a schematic diagram of an example of a system environment with beam variants according to example embodiments,
FIG. 15 shows a schematic diagram of an example of a system environment with beam variants according to example embodiments, and
FIG. 16 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

According to example embodiments, in general terms, there are provided measures and mechanisms for (enabling/realizing) controlled terminal-initiated beam management.

As mentioned above, from Rel-15 to Rel-18 5th Generation (5G) New Radio (NR), the beam management has been specified in three phases controlled by the network: Phase#1 (P1), Phase#2 (P2), and Phase#3 (P3), as illustrated in FIG. 10. Example embodiments mainly focus on reporting for P2. However, it is noted that these may be modified to also be applicable for P1 and/or P3.

A general framework may be assumed, where the network configures a UE with a condition that needs to be monitored for beams / TCI-states / RSs, such that UE-initiated beam reporting/switch is triggered if such condition is satisfied.

The condition may comprise a change in the best TCI (that could be DL only, UL only, both, or joint) or beam or beam pair/group based on RSRP (or other similar metrics) for certain TRPs.

As mentioned above, on one side, in view of advantages accompanied therewith, it might be intended/desired/wanted that the UE (as an example of a terminal) does UE-initiated beam reporting/switch in order to, in certain situations, either reduce overhead or to avoid beam failure, while, on the other side, it might be intended/desired/wanted that the network still has control of the whole beam management procedure.

Example embodiments start out from that it could be useful/helpful for both the network (to have more control on beam switching/reporting) and the UE (to limit the UE space of possibilities and therefore simplify its implementation) to configure some limitations for the UE, such that UE-initiated beam reporting/switch is applicable only for certain beams/TCI states that have particular weight/importance.

Hence, in brief, according to example embodiments, a network configuration is provided to indicate to the UE which reference signals (that represent beams/TCI states) can be candidates for UE-initiated beam reporting/switch and/or which reference signals (beams/TCI states) cannot be candidates for UE-initiated beam reporting/switch.

The restricted candidate reference signals (beams/TCI states) for which UE-initiated beam reporting/switch is allowed depends on the weight/importance of such RSs (beams/TCI states).

According to example embodiments (e.g. a first alternative), only RSs of the TCI states addressing either control channels or shared channels are (or are to be considered as) candidates.

According to further example embodiments (e.g. a second alternative), only RSs of the TCI states associated with the lowest, highest or a specific timing advance group (TAG) ID are (or are to be considered as) candidates.

According to further example embodiments (e.g. a third alternative), only RSs of the TCI states for which the UE reaches a fraction/percentage of the threshold (in not received samples) that triggers BFR are (or are to be considered as) candidates.

Consequently, implementing example embodiments leads to that the network controls the candidate beams for UE-initiated beam reporting/switch by limiting the UE possibilities, i.e., the UE search. In addition, implementing example embodiments leads to reduced complexity and power consumption at the UE because of a limited amount of UE reporting and triggers.

Example embodiments are specified below in more detail.

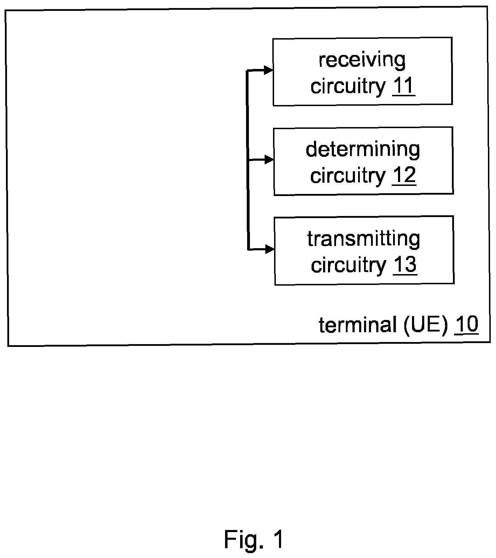

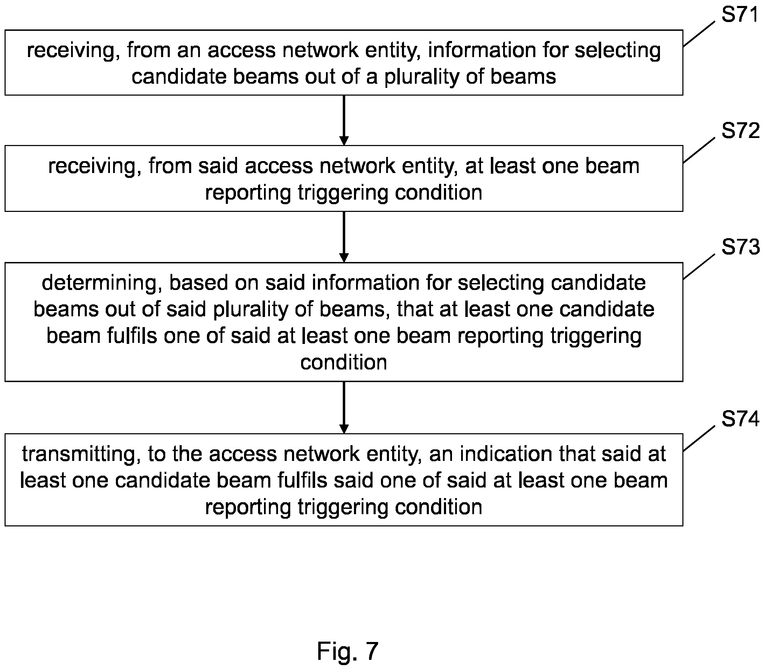

FIG. 1 is a block diagram illustrating an apparatus according to example embodiments. The apparatus may be a terminal 10 such as a user equipment comprising a receiving circuitry 11, a determining circuitry 12, and a transmitting circuitry 13. The receiving circuitry 11 receives, from an access network entity, information for selecting candidate beams out of a plurality of beams. The receiving circuitry 11 (or an additional receiving circuitry) receives, from said access network entity, at least one beam reporting triggering condition. The determining circuitry 12 determines, based on said information for selecting candidate beams out of said plurality of beams, that at least one candidate beam fulfils one of said at least one beam reporting triggering condition. The transmitting circuitry 13 transmits, to the access network entity, an indication that said at least one candidate beam fulfils said one of said at least one beam reporting triggering condition. FIG. 7 is a schematic diagram of a procedure according to example embodiments. The apparatus according to FIG. 1 may perform the method of FIG. 7 but is not limited to this method. The method of FIG. 7 may be performed by the apparatus of FIG. 1 but is not limited to being performed by this apparatus.

As shown in FIG. 7, a procedure according to example embodiments comprises an operation of receiving (S71), from an access network entity, information for selecting candidate beams out of a plurality of beams, an operation of receiving (S72), from said access network entity, at least one beam reporting triggering condition, an operation of determining (S73), based on said information for selecting candidate beams out of said plurality of beams, that at least one candidate beam fulfils one of said at least one beam reporting triggering condition, and an operation of transmitting (S74), to the access network entity, an indication that said at least one candidate beam fulfils said one of said at least one beam reporting triggering condition.

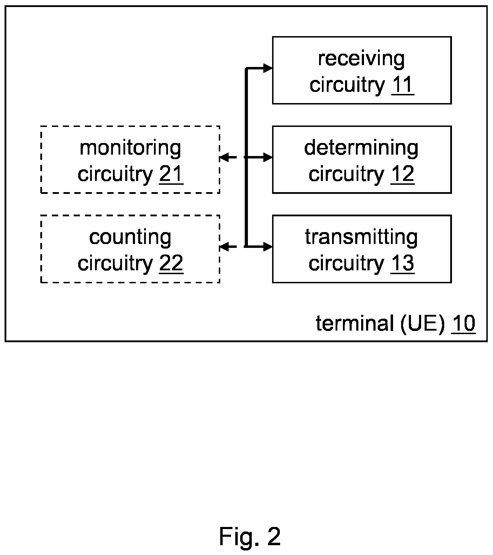

FIG. 2 is a block diagram illustrating an apparatus according to example embodiments. In particular, FIG. 2 illustrates a variation of the apparatus shown in FIG. 1. The apparatus according to FIG. 2 may thus further comprise a monitoring circuitry 21 and/or a counting circuitry 22.

In an embodiment at least some of the functionalities of the apparatus shown in FIG. 1 (or 2) may be shared between two physically separate devices forming one operational entity. Therefore, the apparatus may be seen to depict the operational entity comprising one or more physically separate devices for executing at least some of the described processes.

As mentioned, the apparatus 10 may be a terminal such as a user equipment. The terminal may, although not illustrated in FIG. 1 or 2, comprise at least one memory, at least one processor, at least one display, at least one battery, at least one antenna, at least one baseband circuitry, or at least one transceiver, or any combination thereof. The terminal may in particular comprise at least one antenna.

Further, while the circuitries mentioned and illustrated in FIG. 1 and 2 (e.g. receiving circuitry 11, determining circuitry 12, transmitting circuitry 13) may be provided in hardware components alone, these may also be provided as software components, or as a combination of hardware components and software components.

According to further example embodiments, each respective beam of said plurality of beams is associated with a respective reference signal.

According to further example embodiments, said information for selecting candidate beams out of said plurality of beams comprises at least one of the following: beams with a transmission configuration indication state associated with at least one control channel, or beams with a transmission configuration indication state not associated with at least one control channel, or beams with a transmission configuration indication state associated with a timing advance group identifier.

According to further example embodiments, said at least one beam reporting triggering condition comprises at least one of the following: a number of beam failure events is lower than a beam failure event threshold, or a number of beam failure events is higher than a beam failure event threshold.

According to further example embodiments, said beam failure event threshold is defined as a percentage of a beam failure recovery threshold.

According to a variation of the procedure shown in FIG. 7, exemplary details of the determining operation (S73) are given, which are inherently independent from each other as such. Such exemplary determining operation (S73) according to example embodiments may comprise an operation of monitoring said plurality of beams with respect to said beam failure events, and an operation of counting said number of beam failure events for each of said plurality of beams.

According to further example embodiments, said at least one beam reporting triggering condition comprises at least one of the following: a power value of a received reference signal is higher than a reference signal received power threshold, or said power value of said received reference signal is lower than said reference signal received power threshold, or a signal to interference and noise ratio value is higher than a signal to interference and noise ratio threshold, or said signal to interference and noise ratio value is lower than said signal to interference and noise ratio threshold, or a channel quality indicator value is higher than a channel quality indicator threshold, or said channel quality indicator is lower than said channel quality indicator threshold.

According to a variation of the procedure shown in FIG. 7, exemplary additional operations are given, which are inherently independent from each other as such. According to such variation, an exemplary method according to example embodiments may comprise an operation of transmitting, towards said access network entity, an indication of an expected frequent terminal triggered beam reporting.

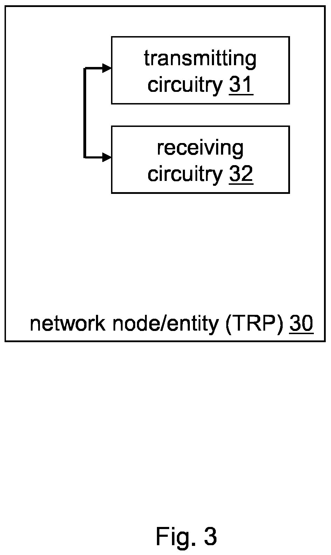

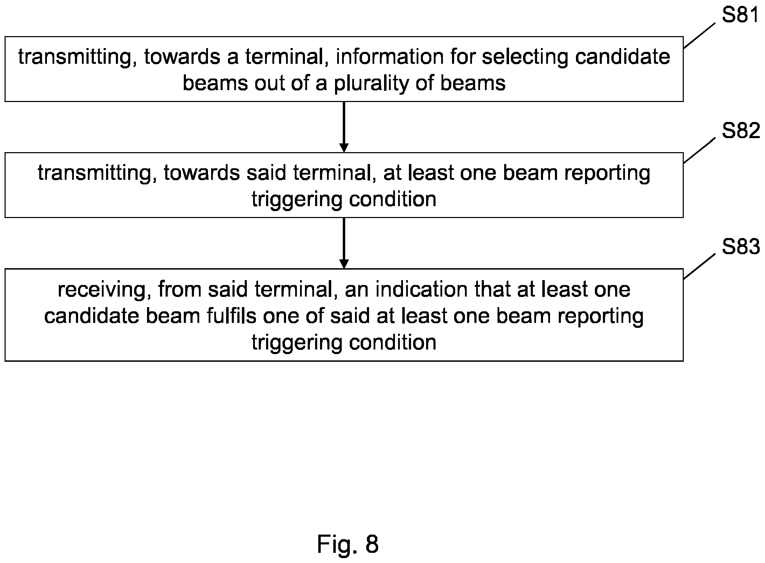

FIG. 3 is a block diagram illustrating an apparatus according to example embodiments. The apparatus may be an access node or entity 30 such as a base station or TRP comprising a transmitting circuitry 31 and a receiving circuitry 32. The transmitting circuitry 31 transmits, towards a terminal, information for selecting candidate beams out of a plurality of beams. The transmitting circuitry 31 (or an additional transmitting circuitry) transmits, towards said terminal, at least one beam reporting triggering condition. The receiving circuitry 32 receives, from said terminal, an indication that at least one candidate beam fulfils one of said at least one beam reporting triggering condition. FIG. 8 is a schematic diagram of a procedure according to example embodiments. The apparatus according to FIG. 3 may perform the method of FIG. 8 but is not limited to this method. The method of FIG. 8 may be performed by the apparatus of FIG. 3 but is not limited to being performed by this apparatus.

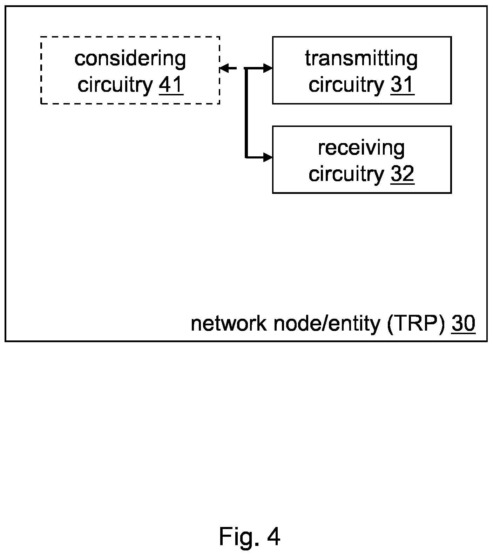

As shown in FIG. 8, a procedure according to example embodiments comprises an operation of transmitting (S81), towards a terminal, information for selecting candidate beams out of a plurality of beams, an operation of transmitting (S82), towards said terminal, at least one beam reporting triggering condition, and an operation of receiving (S83), from said terminal, an indication that at least one candidate beam fulfils one of said at least one beam reporting triggering condition. FIG. 4 is a block diagram illustrating an apparatus according to example embodiments. In particular, FIG. 4 illustrates a variation of the apparatus shown in FIG. 3. The apparatus according to FIG. 4 may thus further comprise a considering circuitry 41.

In an embodiment at least some of the functionalities of the apparatus shown in FIG. 3 (or 4) may be shared between two physically separate devices forming one operational entity. Therefore, the apparatus may be seen to depict the operational entity comprising one or more physically separate devices for executing at least some of the described processes.

While the circuitries mentioned and illustrated in FIG. 3 and 4 (e.g. transmitting circuitry 31, receiving circuitry 32) may be provided in hardware components alone, these may also be provided as software components, or as a combination of hardware components and software components.

According to further example embodiments, each respective beam of said plurality of beams is associated with a respective reference signal.

According to further example embodiments, said information for selecting candidate beams out of said plurality of beams comprises at least one of the following: beams with a transmission configuration indication state associated with at least one control channel, or beams with a transmission configuration indication state not associated with at least one control channel, or beams with a transmission configuration indication state associated with a timing advance group identifier.

According to further example embodiments, said at least one beam reporting triggering condition comprises at least one of the following: a number of beam failure events is lower than a beam failure event threshold, or a number of beam failure events is higher than a beam failure event threshold.

According to further example embodiments, said beam failure event threshold is defined as a percentage of a beam failure recovery threshold.

According to further example embodiments, said at least one beam reporting triggering condition comprises at least one of the following: a power value of a received reference signal is higher than a reference signal received power threshold, or said power value of said received reference signal is lower than said reference signal received power threshold, or a signal to interference and noise ratio value is higher than a signal to interference and noise ratio threshold, or said signal to interference and noise ratio value is lower than said signal to interference and noise ratio threshold, or a channel quality indicator value is higher than a channel quality indicator threshold, or said channel quality indicator is lower than said channel quality indicator threshold.

According to a variation of the procedure shown in FIG. 8, exemplary additional operations are given, which are inherently independent from each other as such. According to such variation, an exemplary method according to example embodiments may comprise an operation of receiving, from said terminal, an indication of an expected frequent terminal triggered beam reporting, and an operation of considering said indication of said expected frequent terminal triggered beam reporting for a beam reporting type configuration.

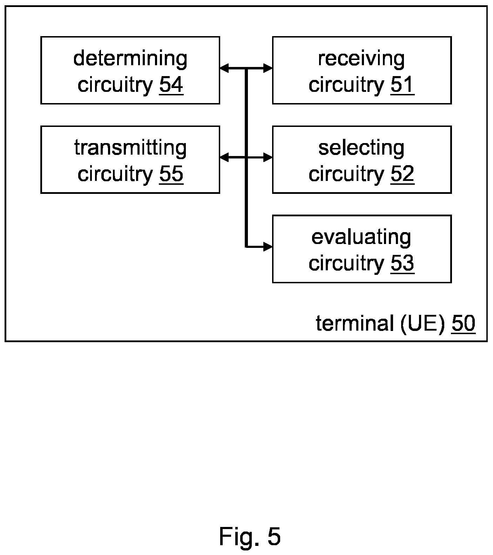

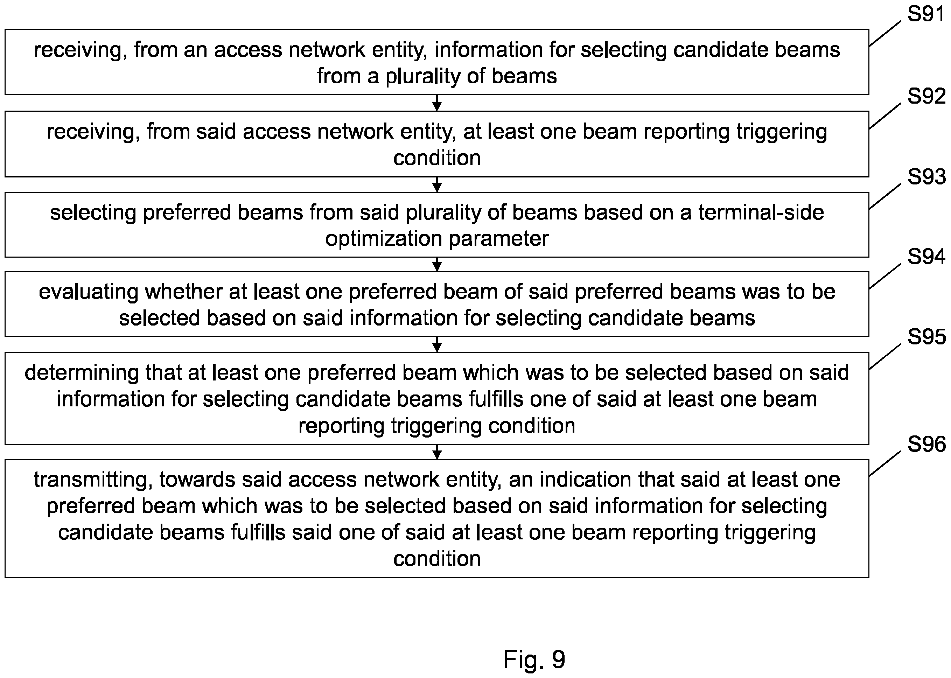

FIG. 5 is a block diagram illustrating an apparatus according to example embodiments. The apparatus may be a terminal 50 such as a user equipment comprising a receiving circuitry 51, a selecting circuitry 52, an evaluating circuitry 53, a determining circuitry 54, and a transmitting circuitry 55. The receiving circuitry 51 receives, from an access network entity, information for selecting candidate beams from a plurality of beams. The receiving circuitry 51 (or an additional receiving circuitry) receives, from said access network entity, at least one beam reporting triggering condition. The selecting circuitry 52 selects preferred beams from said plurality of beams based on a terminal-side optimization parameter. The evaluating circuitry 53 evaluates whether at least one preferred beam of said preferred beams was to be selected based on said information for selecting candidate beams. The determining circuitry 54 determines that at least one preferred beam which was to be selected based on said information for selecting candidate beams fulfills one of said at least one beam reporting triggering condition. The transmitting circuitry 55 transmits, towards said access network entity, an indication that said at least one preferred beam which was to be selected based on said information for selecting candidate beams fulfills said one of said at least one beam reporting triggering condition. FIG. 9 is a schematic diagram of a procedure according to example embodiments. The apparatus according to FIG. 5 may perform the method of FIG. 9 but is not limited to this method. The method of FIG. 9 may be performed by the apparatus of FIG. 5 but is not limited to being performed by this apparatus.

As shown in FIG. 9, a procedure according to example embodiments comprises an operation of receiving (S91), from an access network entity, information for selecting candidate beams from a plurality of beams, an operation of receiving (S92), from said access network entity, at least one beam reporting triggering condition, an operation of selecting (S93) preferred beams from said plurality of beams based on a terminal-side optimization parameter, an operation of evaluating (S94) whether at least one preferred beam of said preferred beams was to be selected based on said information for selecting candidate beams, an operation of determining (S95) that at least one preferred beam which was to be selected based on said information for selecting candidate beams fulfills one of said at least one beam reporting triggering condition, and an operation of transmitting (S96), towards said access network entity, an indication that said at least one preferred beam which was to be selected based on said information for selecting candidate beams fulfills said one of said at least one beam reporting triggering condition.

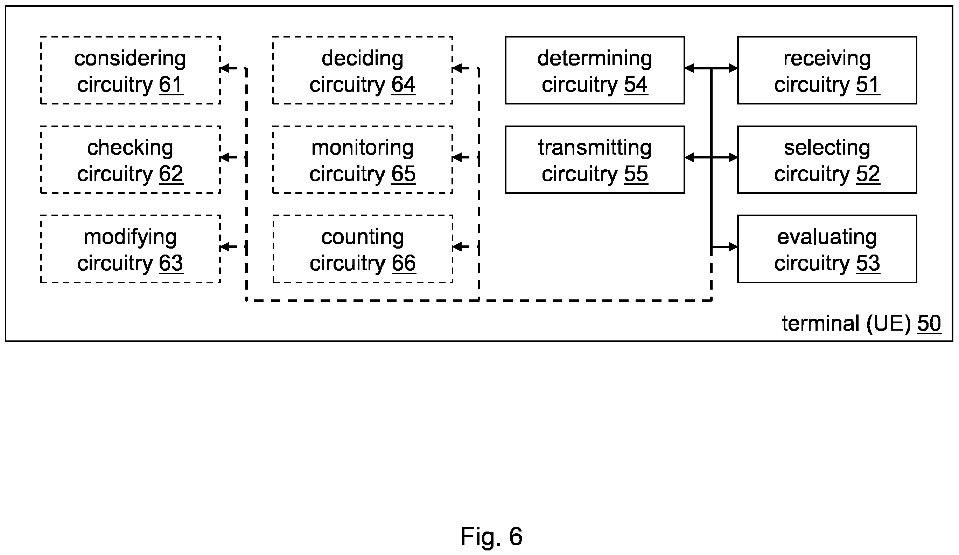

FIG. 6 is a block diagram illustrating an apparatus according to example embodiments. In particular, FIG. 6 illustrates a variation of the apparatus shown in FIG. 5. The apparatus according to FIG. 6 may thus further comprise a considering circuitry 61, a checking circuitry 62, a modifying circuitry 63, a deciding circuitry 64, a monitoring circuitry 65, and/or a counting circuitry 66.

In an embodiment at least some of the functionalities of the apparatus shown in FIG. 5 (or 6) may be shared between two physically separate devices forming one operational entity. Therefore, the apparatus may be seen to depict the operational entity comprising one or more physically separate devices for executing at least some of the described processes.

As mentioned, the apparatus 50 may be a terminal such as a user equipment. The terminal may, although not illustrated in FIG. 5 or 6, comprise at least one memory, at least one processor, at least one display, at least one battery, at least one antenna, at least one baseband circuitry, or at least one transceiver, or any combination thereof. The terminal may in particular comprise at least one antenna.

Further, while the circuitries mentioned and illustrated in FIG. 5 and 6 (e.g. receiving circuitry 51, selecting circuitry 52, evaluating circuitry 53, determining circuitry 54, transmitting circuitry 55) may be provided in hardware components alone, these may also be provided as software components, or as a combination of hardware components and software components.

According to a variation of the procedure shown in FIG. 9, exemplary additional operations are given, which are inherently independent from each other as such. According to such variation, an exemplary method according to example embodiments may comprise an operation of deciding on said terminal-side optimization parameter. Here, said terminal-side optimization parameter includes at least one of the following: link budget, or reliability, or terminal power consumption.

According to a variation of the procedure shown in FIG. 9, exemplary additional operations and exemplary details of the evaluating operation (S94) are given, which are inherently independent from each other as such. According to such variation, said terminal-side optimization parameter is terminal power consumption, and an exemplary method according to example embodiments may comprise an operation of selecting a power mode based on said terminal-side optimization parameter, said power mode defining a number of activated antenna panels. Further, such exemplary evaluating operation (S94) according to example embodiments may comprise an operation of considering only beams for which said number of activated antenna panels is not to be increased.

According to a variation of the procedure shown in FIG. 9, exemplary additional operations and exemplary details of the evaluating operation (S94) are given, which are inherently independent from each other as such. According to such variation, said terminal-side optimization parameter is terminal power consumption, and an exemplary method according to example embodiments may comprise an operation of selecting a power mode based on said terminal-side optimization parameter, said power mode defining a number of activated antenna panels. Further, such exemplary evaluating operation (S94) according to example embodiments may comprise an operation of considering only beams for which said number of activated antenna panels is equal to or smaller than an activated antenna panels threshold.

According to a variation of the procedure shown in FIG. 9, exemplary details of the evaluating operation (S94) are given, which are inherently independent from each other as such. Such exemplary evaluating operation (S94) according to example embodiments may comprise an operation of checking whether a preferred beam not to be selected based on said information for selecting candidate beams would have to be selected based on said information for selecting candidate beams with a modified beam reporting setting, an operation of modifying said beam reporting setting for said preferred beam, and an operation of deciding that said preferred beam was to be selected based on said information for selecting candidate beams.

According to further example embodiments, each respective beam of said plurality of beams is associated with a respective reference signal.

According to further example embodiments, said information for selecting candidate beams from said plurality of beams specifies beams with a transmission configuration indication state associated with at least one control channel.

According to further example embodiments, said information for selecting candidate beams from said plurality of beams specifies beams with a transmission configuration indication state not associated with at least one control channel.

According to further example embodiments, said information for selecting candidate beams from a plurality of beams specifies beams with a transmission configuration indication state associated with a timing advance group identifier.

According to further example embodiments, said information for selecting candidate beams from a plurality of beams specifies beams where a number of beam failure events satisfies a beam failure event threshold condition.

According to further example embodiments, said beam failure event threshold condition is satisfied, if said number of beam failure events is higher than a beam failure event threshold.

According to further example embodiments, said beam failure event threshold condition is satisfied, if said number of beam failure events is lower than said beam failure event threshold.

According to further example embodiments, said beam failure event threshold is defined as a percentage of a beam failure recovery threshold.

According to a variation of the procedure shown in FIG. 9, exemplary details of the selecting operation (S93, selecting said preferred beams from said plurality of beams based on said terminal-side optimization parameter) are given, which are inherently independent from each other as such. Such exemplary selecting operation (S93, selecting said preferred beams from said plurality of beams based on said terminal-side optimization parameter) according to example embodiments may comprise an operation of monitoring said plurality of beams with respect to said beam failure events, and an operation of counting said number of beam failure events for each of said plurality of beams.

Example embodiments outlined and specified above are explained below in more specific terms.

According to example embodiments (e.g. basically in line with the first alternative), in an sDCI mTRP scenario, the network configures the UE via RRC such that there is no UE-initiated beam switching for the TCI that is carrying the PDCCH.

Following such approach, the preference of the network to maintain more control on the TCI carrying the control information because the control information is considered more important can be fulfilled.

Alternatively, according to example embodiments (e.g. basically in line with the first alternative), in an sDCI mTRP scenario, the network configures the UE e.g. via RRC such that there can be a UE-initiated beam switching only for the TCI that is carrying the PDCCH.

Following such approach, the preference of the network to allow the UE to trigger this switch exactly only on the TCI carrying the DCI because it is more important than the second TCI that is not carrying the DCI can be fulfilled.

FIG. 13 is a schematic diagram of a procedure according to example embodiments, and in particular illustrates a method applied to sDCI mTRP where the network configures the UE to do UE-initiated beam reporting/switch for the TCI state carrying PDDCH.

In a first step of FIG. 13, according to example embodiments, the UE is initially configured in an sDCI mTRP scenario to receive DL from two TRPs.

In a second step of FIG. 13, according to example embodiments, the UE receives, e.g., via RRC, a configuration setting as "condition" to do UE-initiated beam reporting the fact that a beam has L1-RSRP below a certain threshold.

The value to which the threshold is set is a network implementation. For example, the network can set the threshold to a rather low value such that, if the L1-RSRP falls below that value, then the reliability of that beam has become too low for carrying PDCCH.

While, in FIG. 13, example embodiments are explained with reference to the L1-RSRP and in particular to the condition to do UE-initiated beam reporting the fact that a beam has L1-RSRP below a certain threshold, there is no limitation to this condition.

Namely, according to example embodiments, other metrics and also different types of thresholds can be used.

For instance, as an alternative to L1-RSRP, L1-SINR can also be used as a metric. Moreover, the UE can be configured to do UE-initiated beam reporting either in case the metric is "above" a threshold or "below" a threshold.

For instance, in the case of L1-SINR
- setting a) a low value for the threshold, e.g., 0 dB, and b) as condition to trigger UE-initiated beam reporting L1-SINR "below" that threshold may help to know at the network side that the reliability of a beam has become particularly bad, and
- on the other hand, setting a) a high value for the threshold, e.g., 20 dB, and b) as condition to trigger UE-initiated beam reporting L1-SINR "above" that threshold may help to know at the network side that the reliability of a beam has become particularly good.

According to example embodiments, further, the UE receives, e.g., via RRC, a configuration such that UE-initiated beam reporting is allowed only for beams carrying PDCCH.

In a third step of FIG. 13, according to example embodiments, the UE monitors L1-RSRP for the beam carrying PDCCH.

If, in a fourth step of FIG. 13, the "condition" is met, i.e., the L1-RSRP of such beam goes below the threshold, according to example embodiments, the UE informs the network about that in a fifth step of FIG. 13.

On the other hand, if, in the fourth step of FIG. 13, the "condition" is not met, i.e., the L1-RSRP of such beam does not go below the threshold, according to example embodiments, the UE returns to the third step of FIG. 13 to further monitors L1-RSRP for the beam carrying PDCCH.

Example embodiments which are basically in line with the first alternative may optionally be concretely implemented as follows.

Namely, generally, according to such concrete implementations, at the UE, it may be decided which parameter is to optimize, e.g., link budget, reliability, or UE power consumption, it may be compared whether preferred gNB beams from UE viewpoint are included in network configuration for UE-initiated reporting, i.e., restrictions/limitations on e.g. pool of beams, and it may be decided if to send a report to gNB or not based on the comparison.

As a first option of such concrete implementations, the UE aims at maximizing the UE Tx power for improved UL performance (link budget and reliability).

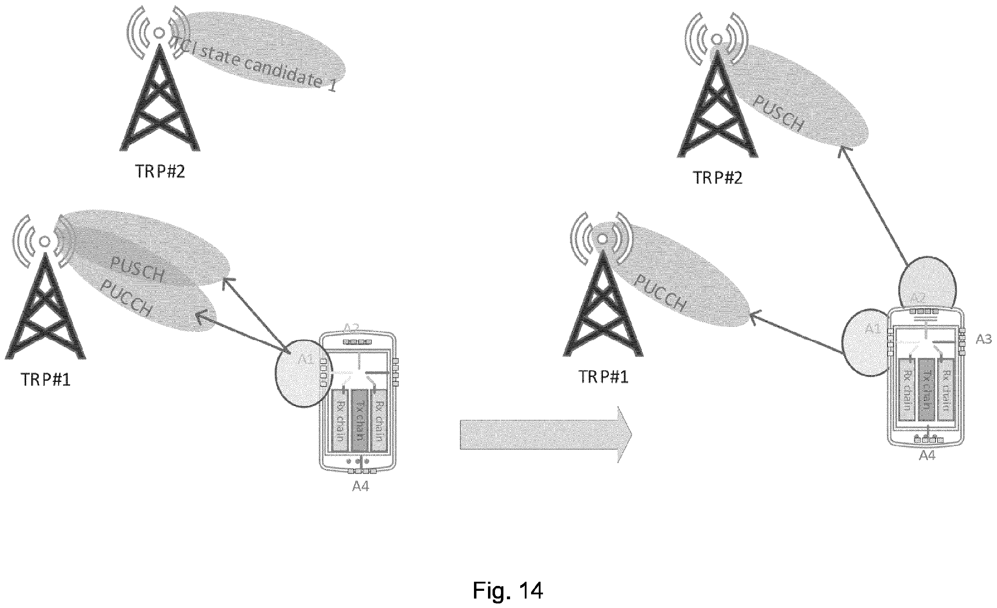

FIG. 14 shows a schematic diagram of an example of a system environment with beam variants according to example embodiments, and in particular illustrates the use case for UE implementation for link budget and reliability.

According thereto, the UE may find the preferred beam ("TCI state candidate 1" in FIG. 14) to report to network, for example to have PUSCH and PUCCH TCI states on different panels, such that higher power can be used.

Further, the UE then checks if the gNB (i.e., the network) has sent a special configuration to restrict UE-initiated beam reporting, for example restricting UE-initiated beam reporting/switch on TCI states carrying only PUSCH.

If yes, i.e., if the gNB (i.e., the network) has sent the special configuration to restrict UE-initiated beam reporting, the UE checks whether the UE preferred beam is within the allowed ones.

If yes, i.e., if the UE preferred beam is within the allowed ones, the UE sends the report.

On the other hand, if not, i.e., if the UE preferred beam is not within the allowed ones, for example because the UE wanted to report such preferred beam for PUCCH but TCI states carrying only PUSCH are the allowed ones, the UE checks whether the UE preferred beam is still a candidate within the restricted framework for example for PUSCH as well.

If the UE panel for such preferred beam would be the same for both PUSCH and PUCCH, then it is still a candidate also for PUSCH, and the UE sends the report.

On the other hand, if the UE panel for such preferred beam would not be the same, then it is not a candidate, and the UE does not trigger the report.

If the gNB (i.e., the network) has not sent the special configuration to restrict UE-initiated beam reporting, i.e., if no restricted configuration regarding the beams that can be reported by UE for UE-initiated beam reporting is present, then the UE sends the report.

As a second option of such concrete implementations, the UE aims at UE power consumption optimization.

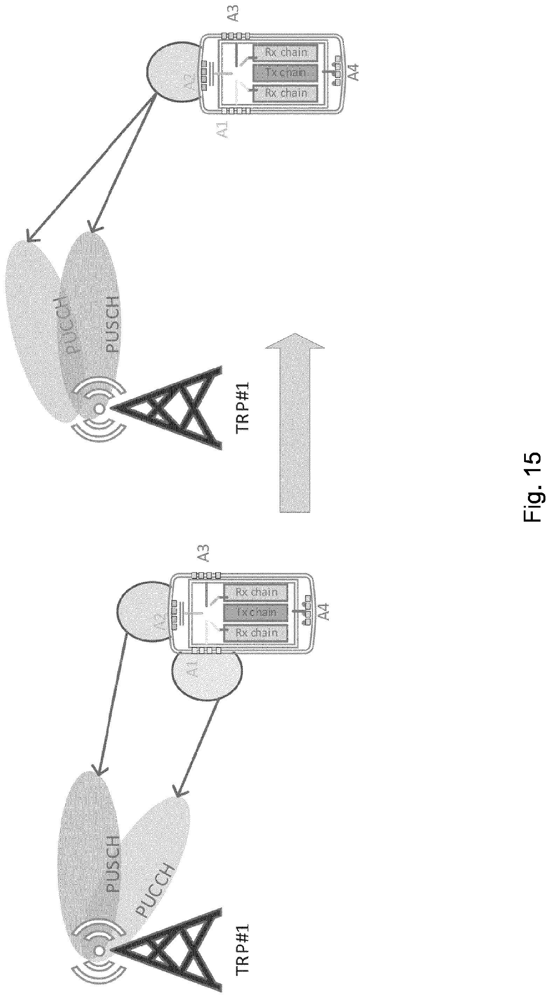

FIG. 15 shows a schematic diagram of an example of a system environment with beam variants according to example embodiments, and in particular illustrates the use case for UE implementation on second embodiment for optimizing UE power consumption.

According thereto, for example, the UE chooses a power mode (e.g., power mode 1 = (up to) all panels "on", power mode 2 = (up to) two panels "on", power mode 3 = one panel "on", where the higher the number of panels "on" mean that the UE also consumes more power).

If the UE chooses power mode 3, the UE only measures preferred beams from a single UE panel.

In such case, for any restriction configured by the network, UE can always trigger the report (considering the above illustrated condition processing).

If the UE chooses power mode 2 or power mode 1, the UE measures preferred beams from at least two panels.

In such case, for any restriction configured by network, the UE only triggers the report if the preferred beam induces to keep the same number of active UE panels or reduce the number of active UE panels.

According to further example embodiments (e.g. basically in line with the second alternative), in a sDCI or mDCI mTRP scenario, the network configures e.g. via RRC or MAC-CE that UE-initiated beam reporting/switch is allowed / not allowed only for TCI states associated to a specific TAG ID.

Namely, there are two timing advances (TA) for uplink (UL) multi-DCI for multi-TRP operations foreseen (e.g. in Rel-18 scenario), and an issue is how to handle the case where the transmission timing difference between two TAGs exceeds the maximum transmission timing difference (MTTD) value. This might be handled for example in either stopping one of the two UL transmissions or leaving the issue up to UE implementation.

If the network has some knowledge about the receive timing difference (RTD) (because for example sent back by the UE), the network would have knowledge about which UL transmission associated to a specific TAG (among two in Rel-18 scenario or >2 in for example 6G) is the major cause of potential maximum reception timing difference (MRTD)/MTTD violation, and configures the UE for UE-initiated beam reporting/switch for only for TCI states associated to that specific TAG ID.

According to further example embodiments (e.g. basically in line with the third alternative), to avoid triggering beam failure recovery (BFR) which is costly for both the UE and the network, the network configures the UE e.g. via RRC to do UE-initiated beam switching when the UE reaches a fraction/percentage of the threshold (in not received samples) that triggers BFR.

For example, the network could configure a UE for UE-initiated beam switching when the UE reaches 50% (other percentages are possible) of a parameter representing the threshold that triggers BFR. The parameter may be e.g. the "beamFailureInstanceMaxCount" as specified in TS38.321.

This would lead to or at least facilitate avoidance or at least minimization of BFR events.

According to further example embodiments, the restricted set of reference signals that can be reported in the UE initiated reporting is a subset of the reference signals configured for the normal L1-RSRP reporting. The subset may be according to one or more of the foregoing example embodiments.

According to further example embodiments, the UE adds into the report discussed above in relation to foregoing example embodiments additional information indicating whether the UE expects more frequent UE-initiated reporting or not. This could indicate to the network to setup periodic or semi-persistent reporting if the UE observes that the measurements of the beams are changing in fast manner.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network device (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

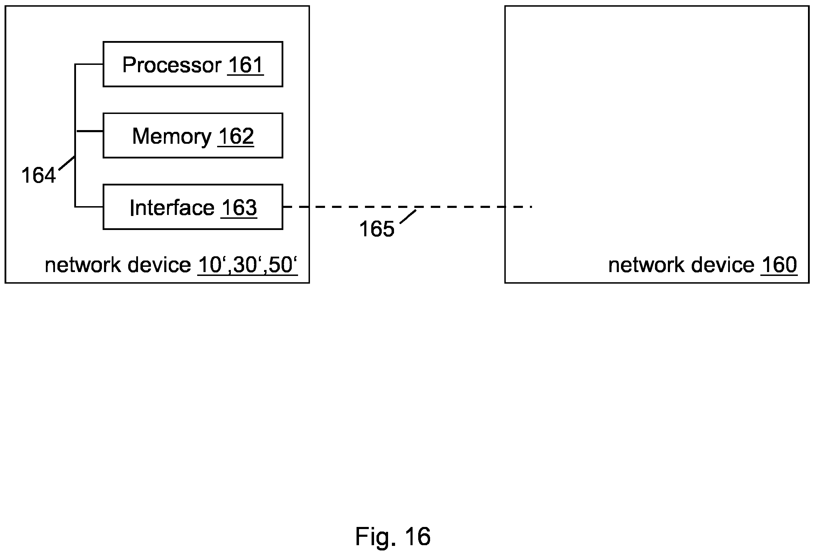

In FIG. 16, an alternative illustration of apparatuses according to example embodiments is depicted. As indicated in FIG. 16, according to example embodiments, the apparatus (network device) 10' (corresponding to the terminal 10) comprises a processor 161, a memory 162 and an interface 163, which are connected by a bus 164 or the like. Further, according to example embodiments, the apparatus (network device) 30' (corresponding to the network node/entity 30) comprises a processor 161, a memory 162 and an interface 163, which are connected by a bus 164 or the like. Further, according to example embodiments, the apparatus (network device) 50' (corresponding to the terminal 50) comprises a processor 161, a memory 162 and an interface 163, which are connected by a bus 164 or the like. The apparatuses 10', 30', 50' may be connected via link 165 to another network device 160, e.g., any other of the apparatuses 10', 30', 50'.

The processor 161 and/or the interface 163 may also include a modem or the like to facilitate communication over a (hardwire or wireless) link, respectively. The interface 163 may include a suitable transceiver coupled to one or more antennas or communication means for (hardwire or wireless) communications with the linked or connected device(s), respectively. The interface 163 is generally configured to communicate with at least one other apparatus, i.e. the interface thereof.

The memory 162 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the terminal 10 comprises at least one processor 161, at least one memory 162 including computer program code, and at least one interface 163 configured for communication with at least another apparatus. The processor (i.e. the at least one processor 161, with the at least one memory 162 and the computer program code) is configured to perform receiving, from an access network entity, information for selecting candidate beams out of a plurality of beams (thus the apparatus comprising corresponding means for receiving), to perform receiving, from said access network entity, at least one beam reporting triggering condition, to perform determining, based on said information for selecting candidate beams out of said plurality of beams, that at least one candidate beam fulfils one of said at least one beam reporting triggering condition (thus the apparatus comprising corresponding means for determining), and to perform transmitting, to the access network entity, an indication that said at least one candidate beam fulfils said one of said at least one beam reporting triggering condition (thus the apparatus comprising corresponding means for transmitting).

According to example embodiments, an apparatus representing the network node/entity 30 comprises at least one processor 161, at least one memory 162 including computer program code, and at least one interface 163 configured for communication with at least another apparatus. The processor (i.e. the at least one processor 161, with the at least one memory 162 and the computer program code) is configured to perform transmitting, towards a terminal, information for selecting candidate beams out of a plurality of beams (thus the apparatus comprising corresponding means for transmitting), to perform transmitting, towards said terminal, at least one beam reporting triggering condition, and to perform receiving, from said terminal, an indication that at least one candidate beam fulfils one of said at least one beam reporting triggering condition (thus the apparatus comprising corresponding means for receiving).

According to example embodiments, an apparatus representing the terminal 50 comprises at least one processor 161, at least one memory 162 including computer program code, and at least one interface 163 configured for communication with at least another apparatus. The processor (i.e. the at least one processor 161, with the at least one memory 162 and the computer program code) is configured to perform receiving, from an access network entity, information for selecting candidate beams from a plurality of beams (thus the apparatus comprising corresponding means for receiving), to perform receiving, from said access network entity, at least one beam reporting triggering condition, to perform selecting preferred beams from said plurality of beams based on a terminal-side optimization parameter (thus the apparatus comprising corresponding means for selecting), to perform evaluating whether at least one preferred beam of said preferred beams was to be selected based on said information for selecting candidate beams (thus the apparatus comprising corresponding means for evaluating), to perform determining that at least one preferred beam which was to be selected based on said information for selecting candidate beams fulfills one of said at least one beam reporting triggering condition (thus the apparatus comprising corresponding means for determining), and to perform transmitting, towards said access network entity, an indication that said at least one preferred beam which was to be selected based on said information for selecting candidate beams fulfills said one of said at least one beam reporting triggering condition (thus the apparatus comprising corresponding means for transmitting).

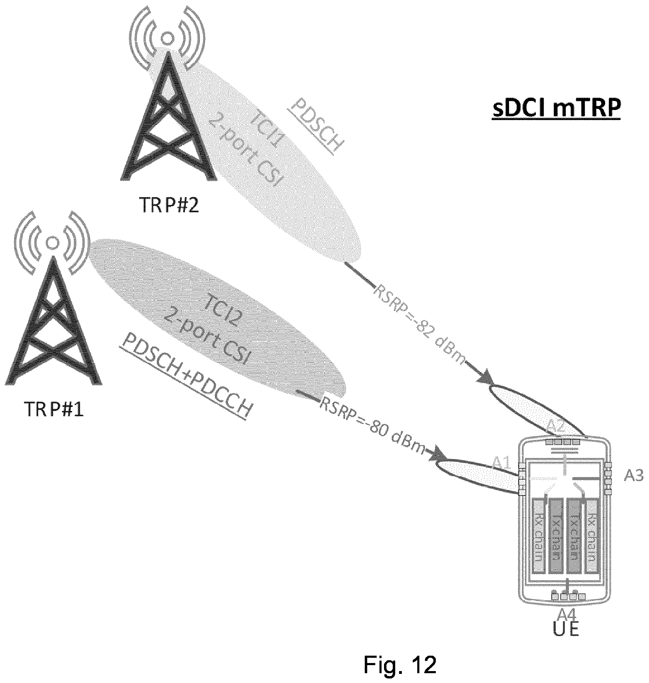

For further details regarding the operability/functionality of the individual apparatuses, reference is made to the above description in connection with any one of FIGs. 1 to 15, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for controlled terminal-initiated beam management. Such measures exemplarily comprise receiving, from an access network entity, information for selecting candidate beams from a plurality of beams, receiving, from said access network entity, at least one beam reporting triggering condition, selecting preferred beams from said plurality of beams based on a terminal-side optimization parameter, evaluating whether at least one preferred beam of said preferred beams was to be selected based on said information for selecting candidate beams, determining that at least one preferred beam which was to be selected based on said information for selecting candidate beams fulfills one of said at least one beam reporting triggering condition, and transmitting, towards said access network entity, an indication that said at least one preferred beam which was to be selected based on said information for selecting candidate beams fulfills said one of said at least one beam reporting triggering condition.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

At least the following example Items are covered by the above described:
Item 1. An apparatus, the apparatus comprising
   at least one processor, and
   at least one memory storing instructions that, when executed by the at least one processor, cause the apparatus at least to perform:
      receiving, from an access network entity, information for selecting candidate beams from a plurality of beams,
      receiving, from said access network entity, at least one beam reporting triggering condition,
      selecting preferred beams from said plurality of beams based on a terminal-side optimization parameter,
      evaluating whether at least one preferred beam of said preferred beams was to be selected based on said information for selecting candidate beams,
      determining that at least one preferred beam which was to be selected based on said information for selecting candidate beams fulfills one of said at least one beam reporting triggering condition, and
      transmitting, towards said access network entity, an indication that said at least one preferred beam which was to be selected based on said information for selecting candidate beams fulfills said one of said at least one beam reporting triggering condition.
Item 2. The apparatus according to Item 1, wherein
   the instructions, when executed by the at least one processor, cause the apparatus at least to perform:
   deciding on said terminal-side optimization parameter, wherein
   said terminal-side optimization parameter includes at least one of the following:
      link budget, or
      reliability, or
      terminal power consumption.
Item 3. The apparatus according to Item 2, wherein
   said terminal-side optimization parameter is terminal power consumption, and the instructions, when executed by the at least one processor, cause the apparatus at least to perform:
   selecting a power mode based on said terminal-side optimization parameter, said power mode defining a number of activated antenna panels, wherein
   in relation to said evaluating, the instructions, when executed by the at least one processor, cause the apparatus at least to perform:
      considering only beams for which said number of activated antenna panels is not to be increased.
Item 4. The apparatus according to Item 2, wherein
   said terminal-side optimization parameter is terminal power consumption, and the instructions, when executed by the at least one processor, cause the apparatus at least to perform:
   selecting a power mode based on said terminal-side optimization parameter, said power mode defining a number of activated antenna panels, wherein
   in relation to said evaluating, the instructions, when executed by the at least one processor, cause the apparatus at least to perform:
      considering only beams for which said number of activated antenna panels is equal to or smaller than an activated antenna panels threshold.
Item 5. The apparatus according to Item 1 or 2, wherein
   in relation to said evaluating, the instructions, when executed by the at least one processor, cause the apparatus at least to perform:
   checking whether a preferred beam not to be selected based on said information for selecting candidate beams would have to be selected based on said information for selecting candidate beams with a modified beam reporting setting,
   modifying said beam reporting setting for said preferred beam, and
   deciding that said preferred beam was to be selected based on said information for selecting candidate beams.
Item 6. The apparatus according to any of Items 1 to 5, wherein
   each respective beam of said plurality of beams is associated with a respective reference signal.
Item 7. The apparatus according to any of Items 1 to 6, wherein
   said information for selecting candidate beams from said plurality of beams specifies beams with a transmission configuration indication state associated with at least one control channel.
Item 8. The apparatus according to any of Items 1 to 6, wherein
   said information for selecting candidate beams from said plurality of beams specifies beams with a transmission configuration indication state not associated with at least one control channel.
Item 9. The apparatus according to any of Items 1 to 6, wherein
   said information for selecting candidate beams from a plurality of beams specifies beams with a transmission configuration indication state associated with a timing advance group identifier.
Item 10. The apparatus according to any of Items 1 to 6, wherein
   said information for selecting candidate beams from a plurality of beams specifies beams where a number of beam failure events satisfies a beam failure event threshold condition.
Item 11. The apparatus according to Item 10, wherein
   said beam failure event threshold condition is satisfied, if said number of beam failure events is higher than a beam failure event threshold, or
   said beam failure event threshold condition is satisfied, if said number of beam failure events is lower than said beam failure event threshold.
Item 12. The apparatus according to Item 11, wherein
   said beam failure event threshold is defined as a percentage of a beam failure recovery threshold.
Item 13. The apparatus according to any of Items 10 to 12, wherein
   in relation to said selecting said preferred beams from said plurality of beams based on said terminal-side optimization parameter, the instructions, when executed by the at least one processor, cause the apparatus at least to perform:
   monitoring said plurality of beams with respect to said beam failure events, and
   counting said number of beam failure events for each of said plurality of beams.
Item 14. A method, the method comprising
   receiving, from an access network entity, information for selecting candidate beams from a plurality of beams,
   receiving, from said access network entity, at least one beam reporting triggering condition,
   selecting preferred beams from said plurality of beams based on a terminal-side optimization parameter,
   evaluating whether at least one preferred beam of said preferred beams was to be selected based on said information for selecting candidate beams,
   determining that at least one preferred beam which was to be selected based on said information for selecting candidate beams fulfills one of said at least one beam reporting triggering condition, and
   transmitting, towards said access network entity, an indication that said at least one preferred beam which was to be selected based on said information for selecting candidate beams fulfills said one of said at least one beam reporting triggering condition.
Item 15. The method according to Item 14, further comprising
   deciding on said terminal-side optimization parameter, wherein
   said terminal-side optimization parameter includes at least one of the following:
      link budget, or
      reliability, or
      terminal power consumption.
Item 16. The method according to Item 15, wherein
   said terminal-side optimization parameter is terminal power consumption, and the method further comprises
   selecting a power mode based on said terminal-side optimization parameter, said power mode defining a number of activated antenna panels, wherein
   in relation to said evaluating, the method further comprises
      considering only beams for which said number of activated antenna panels is not to be increased.
Item 17. The method according to Item 15, wherein
   said terminal-side optimization parameter is terminal power consumption, and the method further comprises
   selecting a power mode based on said terminal-side optimization parameter, said power mode defining a number of activated antenna panels, wherein
   in relation to said evaluating, the method further comprises
      considering only beams for which said number of activated antenna panels is equal to or smaller than an activated antenna panels threshold.
Item 18. The method according to Item 14 or 15, wherein
   in relation to said evaluating, the method further comprises
   checking whether a preferred beam not to be selected based on said information for selecting candidate beams would have to be selected based on said information for selecting candidate beams with a modified beam reporting setting,
   modifying said beam reporting setting for said preferred beam, and
   deciding that said preferred beam was to be selected based on said information for selecting candidate beams.
Item 19. The method according to any of Items 14 to 18, wherein
   each respective beam of said plurality of beams is associated with a respective reference signal.
Item 20. The method according to any of Items 14 to 19, wherein
   said information for selecting candidate beams from said plurality of beams specifies beams with a transmission configuration indication state associated with at least one control channel.
Item 21. The method according to any of Items 14 to 19, wherein
   said information for selecting candidate beams from said plurality of beams specifies beams with a transmission configuration indication state not associated with at least one control channel.
Item 22. The method according to any of Items 14 to 19, wherein
   said information for selecting candidate beams from a plurality of beams specifies beams with a transmission configuration indication state associated with a timing advance group identifier.
Item 23. The method according to any of Items 14 to 19, wherein
   said information for selecting candidate beams from a plurality of beams specifies beams where a number of beam failure events satisfies a beam failure event threshold condition.
Item 24. The method according to Item 23, wherein
   said beam failure event threshold condition is satisfied, if said number of beam failure events is higher than a beam failure event threshold, or
   said beam failure event threshold condition is satisfied, if said number of beam failure events is lower than said beam failure event threshold.
Item 25. The method according to Item 24, wherein
   said beam failure event threshold is defined as a percentage of a beam failure recovery threshold.
Item 26. The method according to any of Items 23 to 25, wherein
   in relation to said selecting said preferred beams from said plurality of beams based on said terminal-side optimization parameter, the method further comprises
   monitoring said plurality of beams with respect to said beam failure events, and
   counting said number of beam failure events for each of said plurality of beams.
Item 27. An apparatus, the apparatus comprising
   at least one antenna, wherein
   the apparatus is configured to perform the method of any of Items 14 to 26, wherein optionally
      the apparatus is a terminal.
Item 28. An apparatus, the apparatus comprising
   receiving circuitry configured to
      receive, from an access network entity, information for selecting candidate beams from a plurality of beams, and to
      receive, from said access network entity, at least one beam reporting triggering condition,
   selecting circuitry configured to select preferred beams from said plurality of beams based on a terminal-side optimization parameter,
   evaluating circuitry configured to evaluate whether at least one preferred beam of said preferred beams was to be selected based on said information for selecting candidate beams,
   determining circuitry configured to determine that at least one preferred beam which was to be selected based on said information for selecting candidate beams fulfills one of said at least one beam reporting triggering condition, and
   transmitting circuitry configured to transmit, towards said access network entity, an indication that said at least one preferred beam which was to be selected based on said information for selecting candidate beams fulfills said one of said at least one beam reporting triggering condition.
Item 29. The apparatus according to Item 28, further comprising
   deciding circuitry configured to decide on said terminal-side optimization parameter, wherein
   said terminal-side optimization parameter includes at least one of the following:
      link budget, or
      reliability, or
      terminal power consumption.
Item 30. The apparatus according to Item 29, wherein
   said terminal-side optimization parameter is terminal power consumption, and the apparatus further comprises
   selecting circuitry configured to select a power mode based on said terminal-side optimization parameter, said power mode defining a number of activated antenna panels, and
   considering circuitry configured to consider only beams for which said number of activated antenna panels is not to be increased.
Item 31. The apparatus according to Item 15, wherein
   said terminal-side optimization parameter is terminal power consumption, and the apparatus further comprises
   selecting circuitry configured to select a power mode based on said terminal-side optimization parameter, said power mode defining a number of activated antenna panels, and
   considering circuitry configured to consider only beams for which said number of activated antenna panels is equal to or smaller than an activated antenna panels threshold.
Item 32. The apparatus according to Item 28 or 29, further comprising
   checking circuitry configured to check whether a preferred beam not to be selected based on said information for selecting candidate beams would have to be selected based on said information for selecting candidate beams with a modified beam reporting setting,
   modifying circuitry configured to modify said beam reporting setting for said preferred beam, and
   deciding circuitry configured to decide that said preferred beam was to be selected based on said information for selecting candidate beams.
Item 33. The apparatus according to any of Items 28 to 32, wherein
   each respective beam of said plurality of beams is associated with a respective reference signal.
Item 34. The apparatus according to any of Items 28 to 33, wherein
   said information for selecting candidate beams from said plurality of beams specifies beams with a transmission configuration indication state associated with at least one control channel.
Item 35. The apparatus according to any of Items 28 to 33, wherein
   said information for selecting candidate beams from said plurality of beams specifies beams with a transmission configuration indication state not associated with at least one control channel.
Item 36. The apparatus according to any of Items 28 to 33, wherein
   said information for selecting candidate beams from a plurality of beams specifies beams with a transmission configuration indication state associated with a timing advance group identifier.
Item 37. The apparatus according to any of Items 28 to 33, wherein
   said information for selecting candidate beams from a plurality of beams specifies beams where a number of beam failure events satisfies a beam failure event threshold condition.
Item 38. The apparatus according to Item 37, wherein
   said beam failure event threshold condition is satisfied, if said number of beam failure events is higher than a beam failure event threshold, or
   said beam failure event threshold condition is satisfied, if said number of beam failure events is lower than said beam failure event threshold.
Item 39. The apparatus according to Item 38, wherein
   said beam failure event threshold is defined as a percentage of a beam failure recovery threshold.
Item 40. The apparatus according to any of Items 37 to 39, further comprising
   monitoring circuitry configured to monitor said plurality of beams with respect to said beam failure events, and
   counting circuitry configured to count said number of beam failure events for each of said plurality of beams.
Item 41. A computer program product comprising computer-executable computer program code which, when the program is run on a computer, is configured to cause the computer to carry out the method according to any one of Items 14 to 26.
Item 42. The computer program product according to Item 41, wherein the computer program product comprises a computer-readable medium on which the computer-executable computer program code is stored, and/or wherein the program is directly loadable into an internal memory of the computer or a processor thereof.
Item 43. An apparatus comprising
   at least one processor, and
   at least one memory storing instructions that, when executed by the at least one processor, cause the apparatus at least to perform:
      receiving, from an access network entity, information for selecting candidate beams out of a plurality of beams,
      receiving, from said access network entity, at least one beam reporting triggering condition,
      determining, based on said information for selecting candidate beams out of said plurality of beams, that at least one candidate beam fulfils one of said at least one beam reporting triggering condition, and
      transmitting, to the access network entity, an indication that said at least one candidate beam fulfils said one of said at least one beam reporting triggering condition.
Item 44. The apparatus according to Item 43, wherein
   each respective beam of said plurality of beams is associated with a respective reference signal.
Item 45. The apparatus according to any of Items 43 to 44, wherein said information for selecting candidate beams out of said plurality of beams comprises at least one of the following:
   beams with a transmission configuration indication state associated with at least one control channel, or
   beams with a transmission configuration indication state not associated with at least one control channel, or
   beams with a transmission configuration indication state associated with a timing advance group identifier.
Item 46. The apparatus according to any of Items 43 to 45, wherein the at least one beam reporting triggering condition comprises at least one of the following:
   a number of beam failure events is lower than a beam failure event threshold, or
   a number of beam failure events is higher than a beam failure event threshold.
Item 47. The apparatus according to Item 46, wherein
   said beam failure event threshold is defined as a percentage of a beam failure recovery threshold.
Item 48. The apparatus according to any of Items 46 to 47, wherein
   in relation to said determining, the instructions, when executed by the at least one processor, cause the apparatus at least to perform:
   monitoring said plurality of beams with respect to said beam failure events, and
   counting said number of beam failure events for each of said plurality of beams.
Item 49. The apparatus according to any of Items 43 to 48, wherein the at least one beam reporting triggering condition comprises at least one of the following:
   a power value of a received reference signal is higher than a reference signal received power threshold, or
   said power value of said received reference signal is lower than said reference signal received power threshold, or
   a signal to interference and noise ratio value is higher than a signal to interference and noise ratio threshold, or
   said signal to interference and noise ratio value is lower than said signal to interference and noise ratio threshold, or
   a channel quality indicator value is higher than a channel quality indicator threshold, or
   said channel quality indicator is lower than said channel quality indicator threshold.
Item 50. The apparatus according to any of Items 43 to 49, wherein
   the instructions, when executed by the at least one processor, cause the apparatus at least to perform:
   transmitting, towards said access network entity, an indication of an expected frequent terminal triggered beam reporting.
Item 51. An apparatus comprising
   at least one processor, and
   at least one memory storing instructions that, when executed by the at least one processor, cause the apparatus at least to perform:
      transmitting, towards a terminal, information for selecting candidate beams out of a plurality of beams,
      transmitting, towards said terminal, at least one beam reporting triggering condition, and
      receiving, from said terminal, an indication that at least one candidate beam fulfils one of said at least one beam reporting triggering condition.
Item 52. The apparatus according to Item 51, wherein
   each respective beam of said plurality of beams is associated with a respective reference signal.
Item 53. The apparatus according to Items 51 or 52, wherein said information for selecting candidate beams out of said plurality of beams comprises at least one of the following:
   beams with a transmission configuration indication state associated with at least one control channel, or
   beams with a transmission configuration indication state not associated with at least one control channel, or
   beams with a transmission configuration indication state associated with a timing advance group identifier.
Item 54. The apparatus according to any of Items 51 to 53, wherein the at least one beam reporting triggering condition comprises at least one of the following:
   a number of beam failure events is lower than a beam failure event threshold, or
   a number of beam failure events is higher than a beam failure event threshold.
Item 55. The apparatus according to Item 54, wherein
   said beam failure event threshold is defined as a percentage of a beam failure recovery threshold.
Item 56. The apparatus according to any of Items 51 to 55, wherein the at least one beam reporting triggering condition comprises at least one of the following:
   a power value of a received reference signal is higher than a reference signal received power threshold, or
   said power value of said received reference signal is lower than said reference signal received power threshold, or
   a signal to interference and noise ratio value is higher than a signal to interference and noise ratio threshold, or
   said signal to interference and noise ratio value is lower than said signal to interference and noise ratio threshold, or
   a channel quality indicator value is higher than a channel quality indicator threshold, or
   said channel quality indicator is lower than said channel quality indicator threshold.
Item 57. The apparatus according to any of Items 51 to 56, wherein
   the instructions, when executed by the at least one processor, cause the apparatus at least to perform:
   receiving, from said terminal, an indication of an expected frequent terminal triggered beam reporting, and
   considering said indication of said expected frequent terminal triggered beam reporting for a beam reporting type configuration.
Item 58. An apparatus comprising
   receiving circuitry configured to
      receive, from an access network entity, information for selecting candidate beams out of a plurality of beams, and to
      receive, from said access network entity, at least one beam reporting triggering condition,
   determining circuitry configured to determine, based on said information for selecting candidate beams out of said plurality of beams, that at least one candidate beam fulfils one of said at least one beam reporting triggering condition, and
   transmitting circuitry configured to transmit, to the access network entity, an indication that said at least one candidate beam fulfils said one of said at least one beam reporting triggering condition.
Item 59. The apparatus according to Item 58, wherein
   each respective beam of said plurality of beams is associated with a respective reference signal.
Item 60. The apparatus according to any of Items 58 to 59, wherein said information for selecting candidate beams out of said plurality of beams comprises at least one of the following:
   beams with a transmission configuration indication state associated with at least one control channel, or
   beams with a transmission configuration indication state not associated with at least one control channel, or
   beams with a transmission configuration indication state associated with a timing advance group identifier.
Item 61. The apparatus according to any of Items 58 to 60, wherein the at least one beam reporting triggering condition comprises at least one of the following:
   a number of beam failure events is lower than a beam failure event threshold, or
   a number of beam failure events is higher than a beam failure event threshold.
Item 62. The apparatus according to Item 61, wherein
   said beam failure event threshold is defined as a percentage of a beam failure recovery threshold.
Item 63. The apparatus according to any of Items 61 to 62, further comprising
   monitoring circuitry configured to monitor said plurality of beams with respect to said beam failure events, and
   counting circuitry configured to count said number of beam failure events for each of said plurality of beams.
Item 64. The apparatus according to any of Items 58 to 63, wherein the at least one beam reporting triggering condition comprises at least one of the following:
   a power value of a received reference signal is higher than a reference signal received power threshold, or
   said power value of said received reference signal is lower than said reference signal received power threshold, or
   a signal to interference and noise ratio value is higher than a signal to interference and noise ratio threshold, or
   said signal to interference and noise ratio value is lower than said signal to interference and noise ratio threshold, or
   a channel quality indicator value is higher than a channel quality indicator threshold, or
   said channel quality indicator is lower than said channel quality indicator threshold.
Item 65. The apparatus according to any of Items 58 to 64, further comprising
   transmitting circuitry configured to transmit, towards said access network entity, an indication of an expected frequent terminal triggered beam reporting.
Item 66. An apparatus comprising
   transmitting circuitry configured to
      transmit, towards a terminal, information for selecting candidate beams out of a plurality of beams, and to
      transmit, towards said terminal, at least one beam reporting triggering condition, and
   receiving circuitry configured to receive, from said terminal, an indication that at least one candidate beam fulfils one of said at least one beam reporting triggering condition.
Item 67. The apparatus according to Item 66, wherein
   each respective beam of said plurality of beams is associated with a respective reference signal.
Item 68. The apparatus according to Items 66 or 67, wherein said information for selecting candidate beams out of said plurality of beams comprises at least one of the following:
   beams with a transmission configuration indication state associated with at least one control channel, or
   beams with a transmission configuration indication state not associated with at least one control channel, or
   beams with a transmission configuration indication state associated with a timing advance group identifier.
Item 69. The apparatus according to any of Items 66 to 68, wherein the at least one beam reporting triggering condition comprises at least one of the following:
   a number of beam failure events is lower than a beam failure event threshold, or
   a number of beam failure events is higher than a beam failure event threshold.
Item 70. The apparatus according to Item 69, wherein
   said beam failure event threshold is defined as a percentage of a beam failure recovery threshold.
Item 71. The apparatus according to any of Items 66 to 70, wherein the at least one beam reporting triggering condition comprises at least one of the following:
   a power value of a received reference signal is higher than a reference signal received power threshold, or
   said power value of said received reference signal is lower than said reference signal received power threshold, or
   a signal to interference and noise ratio value is higher than a signal to interference and noise ratio threshold, or
   said signal to interference and noise ratio value is lower than said signal to interference and noise ratio threshold, or
   a channel quality indicator value is higher than a channel quality indicator threshold, or
   said channel quality indicator is lower than said channel quality indicator threshold.
Item 72. The apparatus according to any of Items 66 to 71, further comprising
   receiving circuitry configured to receive, from said terminal, an indication of an expected frequent terminal triggered beam reporting, and
   considering circuitry configured to consider said indication of said expected frequent terminal triggered beam reporting for a beam reporting type configuration.
Item 73. A method comprising
   receiving, from an access network entity, information for selecting candidate beams out of a plurality of beams,
   receiving, from said access network entity, at least one beam reporting triggering condition,
   determining, based on said information for selecting candidate beams out of said plurality of beams, that at least one candidate beam fulfils one of said at least one beam reporting triggering condition, and
   transmitting, to the access network entity, an indication that said at least one candidate beam fulfils said one of said at least one beam reporting triggering condition.
Item 74. The method according to Item 73, wherein
   each respective beam of said plurality of beams is associated with a respective reference signal.
Item 75. The method according to any of Items 73 to 74, wherein said information for selecting candidate beams out of said plurality of beams comprises at least one of the following:
   beams with a transmission configuration indication state associated with at least one control channel, or
   beams with a transmission configuration indication state not associated with at least one control channel, or
   beams with a transmission configuration indication state associated with a timing advance group identifier.
Item 76. The method according to any of Items 73 to 75, wherein the at least one beam reporting triggering condition comprises at least one of the following:
   a number of beam failure events is lower than a beam failure event threshold, or
   a number of beam failure events is higher than a beam failure event threshold.
Item 77. The method according to Item 76, wherein
   said beam failure event threshold is defined as a percentage of a beam failure recovery threshold.
Item 78. The method according to any of Items 76 to 77, wherein
   in relation to said determining, the method further comprises
   monitoring said plurality of beams with respect to said beam failure events, and
   counting said number of beam failure events for each of said plurality of beams.
Item 79. The method according to any of Items 73 to 78, wherein the at least one beam reporting triggering condition comprises at least one of the following:
   a power value of a received reference signal is higher than a reference signal received power threshold, or
   said power value of said received reference signal is lower than said reference signal received power threshold, or
   a signal to interference and noise ratio value is higher than a signal to interference and noise ratio threshold, or
   said signal to interference and noise ratio value is lower than said signal to interference and noise ratio threshold, or
   a channel quality indicator value is higher than a channel quality indicator threshold, or
   said channel quality indicator is lower than said channel quality indicator threshold.
Item 80. The method according to any of Items 73 to 79, further comprising
   transmitting, towards said access network entity, an indication of an expected frequent terminal triggered beam reporting.
Item 81. A method comprising
   transmitting, towards a terminal, information for selecting candidate beams out of a plurality of beams,
   transmitting, towards said terminal, at least one beam reporting triggering condition, and
   receiving, from said terminal, an indication that at least one candidate beam fulfils one of said at least one beam reporting triggering condition.
Item 82. The method according to Item 81, wherein
   each respective beam of said plurality of beams is associated with a respective reference signal.
Item 83. The method according to Items 81 or 82, wherein said information for selecting candidate beams out of said plurality of beams comprises at least one of the following:
   beams with a transmission configuration indication state associated with at least one control channel, or
   beams with a transmission configuration indication state not associated with at least one control channel, or
   beams with a transmission configuration indication state associated with a timing advance group identifier.
Item 84. The method according to any of Items 81 to 83, wherein the at least one beam reporting triggering condition comprises at least one of the following:
   a number of beam failure events is lower than a beam failure event threshold, or
   a number of beam failure events is higher than a beam failure event threshold.
Item 85. The method according to Item 84, wherein
   said beam failure event threshold is defined as a percentage of a beam failure recovery threshold.
Item 86. The method according to any of Items 81 to 85, wherein the at least one beam reporting triggering condition comprises at least one of the following:
   a power value of a received reference signal is higher than a reference signal received power threshold, or
   said power value of said received reference signal is lower than said reference signal received power threshold, or
   a signal to interference and noise ratio value is higher than a signal to interference and noise ratio threshold, or
   said signal to interference and noise ratio value is lower than said signal to interference and noise ratio threshold, or
   a channel quality indicator value is higher than a channel quality indicator threshold, or
   said channel quality indicator is lower than said channel quality indicator threshold.
Item 87. The method according to any of Items 81 to 86, further comprising
   receiving, from said terminal, an indication of an expected frequent terminal triggered beam reporting, and
   considering said indication of said expected frequent terminal triggered beam reporting for a beam reporting type configuration.
Item 88. A computer program product comprising computer-executable computer program code which, when the program is run on a computer, is configured to cause the computer to carry out the method according to any one of Items 73 to 80 or 81 to 87.
Item 89. The computer program product according to Item 88, wherein the computer program product comprises a computer-readable medium on which the computer-executable computer program code is stored, and/or wherein the program is directly loadable into an internal memory of the computer or a processor thereof.

### List of acronyms and abbreviations

- 3GPP: 3rd Generation Partnership Project
- BFR: Beam failure recovery
- DCI: Downlink control information
- DL: Downlink
- FR: Frequency range
- MAC-CE: Medium access control - control element
- MIMO: Multiple-input multiple-output
- MRTD: Maximum transmit timing difference
- MTTD: Maximum receive timing difference
- NW: Network
- PDCCH: Physical downlink control channel
- PDSCH: Physical downlink shared channel
- PRB: Physical resource block
- PUCCH: Physical uplink control channel
- PUSCH: Physical uplink shared channel
- RRC: Radio resource control
- RS: Reference signal
- RSRP: Reference signal received power
- RTD: Receive timing difference
- SINR: Signal to interference plus noise ratio
- SNR: Signal to noise ratio
- STxMP: Simultaneous multi-panel
- TA: Timing advance
- TAG: Timing advance group
- TCI: Transmission configuration indicator
- TDM: Time division multiplex
- TRP: Transmission and reception point
- UE: User equipment
- UL: Uplink

## Claims

1. An apparatus, the apparatus comprising
at least one processor, and
at least one memory storing instructions that, when executed by the at least one processor, cause the apparatus at least to perform:
receiving, from an access network entity, information for selecting candidate beams from a plurality of beams,
receiving, from said access network entity, at least one beam reporting triggering condition,
selecting preferred beams from said plurality of beams based on a terminal-side optimization parameter,
evaluating whether at least one preferred beam of said preferred beams was to be selected based on said information for selecting candidate beams,
determining that at least one preferred beam which was to be selected based on said information for selecting candidate beams fulfills one of said at least one beam reporting triggering condition, and
transmitting, towards said access network entity, an indication that said at least one preferred beam which was to be selected based on said information for selecting candidate beams fulfills said one of said at least one beam reporting triggering condition.

2. The apparatus according to claim 1, wherein
the instructions, when executed by the at least one processor, cause the apparatus at least to perform:
deciding on said terminal-side optimization parameter, wherein
said terminal-side optimization parameter includes at least one of the following:
link budget, or
reliability, or
terminal power consumption.

3. The apparatus according to claim 2, wherein
said terminal-side optimization parameter is terminal power consumption, and the instructions, when executed by the at least one processor, cause the apparatus at least to perform:
selecting a power mode based on said terminal-side optimization parameter, said power mode defining a number of activated antenna panels, wherein
in relation to said evaluating, the instructions, when executed by the at least one processor, cause the apparatus at least to perform:
considering only beams for which said number of activated antenna panels is not to be increased.

4. The apparatus according to claim 2, wherein
said terminal-side optimization parameter is terminal power consumption, and the instructions, when executed by the at least one processor, cause the apparatus at least to perform:
selecting a power mode based on said terminal-side optimization parameter, said power mode defining a number of activated antenna panels, wherein
in relation to said evaluating, the instructions, when executed by the at least one processor, cause the apparatus at least to perform:
considering only beams for which said number of activated antenna panels is equal to or smaller than an activated antenna panels threshold.

5. The apparatus according to claim 1 or 2, wherein
in relation to said evaluating, the instructions, when executed by the at least one processor, cause the apparatus at least to perform:
checking whether a preferred beam not to be selected based on said information for selecting candidate beams would have to be selected based on said information for selecting candidate beams with a modified beam reporting setting,
modifying said beam reporting setting for said preferred beam, and
deciding that said preferred beam was to be selected based on said information for selecting candidate beams.

6. The apparatus according to any of claims 1 to 5, wherein
each respective beam of said plurality of beams is associated with a respective reference signal.

7. The apparatus according to any of claims 1 to 6, wherein
said information for selecting candidate beams from said plurality of beams specifies beams with a transmission configuration indication state associated with at least one control channel, or
said information for selecting candidate beams from said plurality of beams specifies beams with a transmission configuration indication state not associated with at least one control channel, or
said information for selecting candidate beams from a plurality of beams specifies beams with a transmission configuration indication state associated with a timing advance group identifier.

8. The apparatus according to any of claims 1 to 6, wherein
said information for selecting candidate beams from a plurality of beams specifies beams where a number of beam failure events satisfies a beam failure event threshold condition.

9. The apparatus according to claim 8, wherein
said beam failure event threshold condition is satisfied, if said number of beam failure events is higher than a beam failure event threshold, or
said beam failure event threshold condition is satisfied, if said number of beam failure events is lower than said beam failure event threshold, wherein optionally
said beam failure event threshold is defined as a percentage of a beam failure recovery threshold.

10. The apparatus according to claim 8 or 9, wherein
in relation to said selecting said preferred beams from said plurality of beams based on said terminal-side optimization parameter, the instructions, when executed by the at least one processor, cause the apparatus at least to perform:
monitoring said plurality of beams with respect to said beam failure events, and
counting said number of beam failure events for each of said plurality of beams.

11. A method, the method comprising
receiving, from an access network entity, information for selecting candidate beams from a plurality of beams,
receiving, from said access network entity, at least one beam reporting triggering condition,
selecting preferred beams from said plurality of beams based on a terminal-side optimization parameter,
evaluating whether at least one preferred beam of said preferred beams was to be selected based on said information for selecting candidate beams,
determining that at least one preferred beam which was to be selected based on said information for selecting candidate beams fulfills one of said at least one beam reporting triggering condition, and
transmitting, towards said access network entity, an indication that said at least one preferred beam which was to be selected based on said information for selecting candidate beams fulfills said one of said at least one beam reporting triggering condition.

12. The method according to claim 11, further comprising
deciding on said terminal-side optimization parameter, wherein
said terminal-side optimization parameter includes at least one of the following:
link budget, or
reliability, or
terminal power consumption.

13. The method according to claim 12, wherein
said terminal-side optimization parameter is terminal power consumption, and the method further comprises
selecting a power mode based on said terminal-side optimization parameter, said power mode defining a number of activated antenna panels, wherein
in relation to said evaluating, the method further comprises
considering only beams for which said number of activated antenna panels is not to be increased.

14. The method according to claim 12, wherein
said terminal-side optimization parameter is terminal power consumption, and the method further comprises
selecting a power mode based on said terminal-side optimization parameter, said power mode defining a number of activated antenna panels, wherein
in relation to said evaluating, the method further comprises
considering only beams for which said number of activated antenna panels is equal to or smaller than an activated antenna panels threshold.

15. An apparatus, the apparatus comprising
at least one antenna, wherein
the apparatus is configured to perform the method of any of claims 11 to 14, wherein optionally
the apparatus is a terminal.
